# EUROPÄISCHE PATENTSCHRIFT

(11) **EP 2 922 384 B1**
(45) Veröffentlichungstag und Bekanntmachung des Hinweises auf die Patenterteilung: **14.02.2018**
(21) Anmeldenummer: 13779823.7
(22) Anmeldetag: 21.10.2013
(51) Int. Cl.: G05D 1/02, A01D 34/00, B60L 11/18

(54) **AUTONOMES FORTBEWEGUNGSGERÄT**
AUTONOMOUS LOCOMOTION DEVICE
DISPOSITIF DE LOCOMOTION AUTONOME

(30) Priorität: 26.11.2012 DE 102012221572
(43) Veröffentlichungstag der Anmeldung: 30.09.2015
(73) Patentinhaber: Robert Bosch GmbH, 70442 Stuttgart (DE)
(72) Erfinder: SIMON, Stephan, 31079 Sibbesse (DE)
(86) Internationale Anmeldenummer: PCT/EP2013/071934
(87) Internationale Veröffentlichungsnummer: WO 2014/079632

(56) Entgegenhaltungen:
- EP-A1- 1 580 687
- EP-A1- 2 192 384
- WO-A1-2006/087542
- DE-A1-102004 060 853
- DE-A1-102009 003 061
- US-A- 5 155 684
- US-A1- 2008 195 316

## Beschreibung

### Stand der Technik

Es sind bereits autonome Fortbewegungsgeräte, insbesondere autonome Rasenmäher, bekannt, die eine Bilderfassungseinheit zu einer Aufnahme von zumindest einem Umgebungsbild und/oder von zumindest einer Umgebungsbildsequenz, eine Recheneinheit zu einer Auswertung des aufgenommenen Umgebungsbilds und/oder der aufgenommenen Umgebungsbildsequenz und eine Speichereinheit zu einer Speicherung zumindest eines Umgebungsbilds und/oder zumindest einer Umgebungsbildsequenz umfassen. Die Recheneinheit der bereits bekannten autonomen Fortbewegungsgeräte ist hierbei jeweils zu einer Erarbeitung einer Bewegungsstrategie dazu vorgesehen, markante visuelle Merkmale, wie beispielsweise spezielle Markierungen in einer Arbeitsumgebung des autonomen Fortbewegungsgeräts, Pflanzen, Gegenstände usw., in dem aufgenommenen Umgebungsbild und/oder in der aufgenommenen Umgebungsbildsequenz zu lokalisieren, die markanten visuellen Merkmalen in dem gespeicherten Umgebungsbild und/oder in der gespeicherten Umgebungsbildsequenz entsprechen bzw. zuordenbar sind, um somit eine Selbstlokalisation durchführen zu können, die zur autonomen Fortbewegung in einer Arbeitsumgebung genutzt werden kann. Die DE 10 2004 060853 A1 offenbart ein entsprechendes autonomes Fortbewegungsgerät nach dem Oberbegriff des Anspruchs 1 sowie ein Verfahren zur Steuerung desselben nach dem Oberbegriff des Anspruchs 7.

### Offenbarung der Erfindung

Die Erfindung geht aus von einem autonomen Fortbewegungsgerät, insbesondere von einem autonomen Rasenmäher, das sich nach einem Anlernprozess selbsttätig in einer Umgebung fortbewegt und/oder sich orientiert, mit zumindest einer Arbeitsflächenbearbeitungseinheit, mit zumindest einer Bilderfassungseinheit zu einer Aufnahme von zumindest einem Umgebungsbild und/oder von zumindest einer Umgebungsbildsequenz, mit zumindest einer Recheneinheit zumindest zu einer Auswertung des aufgenommenen Umgebungsbilds und/oder der aufgenommenen Umgebungsbildsequenz und mit zumindest einer Speichereinheit zu einer Speicherung zumindest eines Umgebungsbilds und/oder zumindest einer Umgebungsbildsequenz, wobei die Recheneinheit in zumindest einem Betriebszustand zu einer Erarbeitung einer Bewegungsstrategie eine Bewegungsschätzung durch einen Vergleich von zumindest einem mittels der Bilderfassungseinheit aufgenommenen Umgebungsbild und/oder einer mittels der Bilderfassungseinheit aufgenommenen Umgebungsbildsequenz mit einem in der Speichereinheit abgelegten Umgebungsbild und/oder mit einer in der Speichereinheit abgelegten Umgebungsbildsequenz ausführt, wobei das in der Speichereinheit abgespeicherte Umgebungsbild und/oder die in der Speichereinheit abgespeicherte Umgebungsbildsequenz für den Vergleich mittels der Recheneinheit während des Anlernprozesses zeitlich vor dem aufgenommenen Umgebungsbild und/ oder vor der aufgenommenen Umgebungsbildsequenz von der Bilderfassungseinheit aufgenommen werden/wird und in der Speichereinheit gespeichert werden/wird. Es wird vorgeschlagen, dass zusätzlich zu dem aufgenommenen Umgebungsbild und/oder der aufgenommenen Umgebungsbildsequenz weitere Daten während des Anlernprozesses in der Speichereinheit abgespeichert werden, die zu einer Steuerung in einer angelernten Arbeitsumgebung nutzbar sind, die zusätzlichen Daten als Betriebszustand der Arbeitsflächenbearbeitungseinheit während einer Aufnahme des jeweiligen Umgebungsbilds und/oder der jeweiligen Umgebungsbildsequenz ausgebildet sind.

Somit ist die Recheneinheit bevorzugt dazu vorgesehen, in zumindest einem Betriebszustand zu einer Erarbeitung einer Bewegungsstrategie einen optischen Fluss (Optical Flow) durch einen Vergleich von zumindest einem mittels der Bilderfassungseinheit aufgenommenen Umgebungsbild und/oder einer mittels der Bilderfassungseinheit aufgenommenen Umgebungsbildsequenz mit einem in der Speichereinheit abgelegten Umgebungsbild und/oder mit einer in der Speichereinheit abgelegten Umgebungsbildsequenz zu bestimmen. Der Begriff "vorgesehen" soll insbesondere speziell programmiert, speziell ausgelegt und/oder speziell ausgestattet definieren.

Unter einem "autonomen Fortbewegungsgerät" soll hier insbesondere ein Gerät verstanden werden, das sich nach einem Anlernprozess selbsttätig in einer Umgebung fortbewegt bzw. sich orientiert. Der Ausdruck "selbsttätig fortbewegen bzw. orientieren" soll hier insbesondere eine Fortbewegung bzw. eine Orientierung des Fortbewegungsgeräts, insbesondere nach einem Anlernprozess, ohne einen menschlichen Eingriff definieren. Das Fortbewegungsgerät kann hierbei als autonomer Rasenmäher, als autonomer Staubsauger, als autonome Kehrmaschine, usw. ausgebildet sein. Bevorzugt ist das autonome Fortbewegungsgerät als autonomer Rasenmäher ausgebildet, der dazu vorgesehen ist, eine als Rasenfläche ausgebildet Arbeitsumgebung abzufahren bzw. zu bearbeiten. Hierzu weist das autonome Fortbewegungsgerät eine Arbeitsflächenbearbeitungseinheit auf, die besonders bevorzugt als Mähwerkeinheit ausgebildet ist. Das mittels der Bilderfassungseinheit aufgenommene Umgebungsbild und/oder die mittels der Bilderfassungseinheit aufgenommene Umgebungsbildsequenz werden/wird zeitlich nach dem in der Speichereinheit abgespeicherten Umgebungsbild und/oder der in der Speichereinheit abgespeicherten Umgebungsbildsequenz von der Bilderfassungseinheit aufgenommen. Das in der Speichereinheit abgespeicherte Umgebungsbild und/oder die in der Speichereinheit abgespeicherte Umgebungsbildsequenz werden/wird für den Vergleich mittels der Recheneinheit somit zeitlich vor dem aufgenommenen Umgebungsbild und/oder vor der aufgenommenen Umgebungsbildsequenz von der Bilderfassungseinheit aufgenommen, insbesondere während eines Anlernprozesses, und in der Speichereinheit gespeichert. Hierbei können/kann das in der Speichereinheit abgespeicherte Umgebungsbild und/oder die in der Speichereinheit abgespeicherte Umgebungsbildsequenz Sekunden, Minuten, Stunden, Tage, Wochen, Monate und/oder Jahre vor dem mittels der Bilderfassungseinheit aufgenommenen Umgebungsbild und/oder die mittels der Bilderfassungseinheit aufgenommenen Umgebungsbildsequenz aufgenommen worden sein. Somit wird/werden das mittels der Bilderfassungseinheit aufgenommene Umgebungsbild und/oder die mittels der Bilderfassungseinheit aufgenommene Umgebungsbildsequenz von einem aktuellen Umgebungsbild und/oder einer aktuellen Umgebungsbildsequenz gebildet, die in zumindest einem Betriebszustand mittels der Bilderfassungseinheit aufgenommen wurden und die eine Arbeitsumgebung abbilden, in der sich das autonome Fortbewegungsgerät befindet, insbesondere aktuell befindet.

Der Begriff "Bilderfassungseinheit" soll hier insbesondere eine Einheit definieren, mittels derer Bilder digital erfassbar sind und elektronisch weiterverarbeitbar sind. Die Bilderfassungseinheit kann hierbei als Sensor, als Scanner, als digitale Fotokamera, als digitale Videokamera usw. ausgebildet sein. Besonders bevorzugt ist die Bilderfassungseinheit als digitale Fotokamera ausgebildet. Unter einer "Recheneinheit" soll insbesondere eine Einheit mit einem Informationseingang, einer Informationsverarbeitung und einer Informationsausgabe verstanden werden. Vorteilhaft weist die Recheneinheit zumindest einen Prozessor, eine Auswerteeinheit, Ein- und Ausgabemittel, weitere elektrische Bauteile, ein Betriebsprogramm, Regelroutinen, Steuerroutinen und/oder Berechnungsroutinen auf. Vorzugsweise sind die Bauteile der Recheneinheit auf einer gemeinsamen Platine angeordnet und/oder vorteilhaft in einem gemeinsamen Gehäuse angeordnet. Bevorzugt ist die Recheneinheit als Mikrocontroller o.dgl. ausgebildet. Der Begriff "Speichereinheit" soll hier insbesondere eine Einheit definieren, die dazu vorgesehen ist, zumindest eine Information, vorteilhaft von einer Stromversorgung unabhängig, elektronisch zu speichern. Bevorzugt ist die Speichereinheit als nichtflüchtige Speichereinheit, wie beispielsweise als Flash-Speichereinheit usw., ausgebildet. Mittels der erfindungsgemäßen Ausgestaltung des autonomen Fortbewegungsgeräts kann vorteilhaft eine präzise Selbstlokalisation des autonomen Fortbewegungsgeräts ermöglicht werden, die eine geringe Rechenleistung der Recheneinheit benötigt. Ferner kann vorteilhaft eine präzise Bewegungsstrategie mittels der Recheneinheit erarbeitet werden, die eine selbsttätige Fortbewegung des autonomen Fortbewegungsgeräts in einer Arbeitsumgebung ermöglicht, wobei die Bewegungsstrategie vorteilhaft unabhängig von markanten visuellen Gegenständen in dem aufgenommenen Umgebungsbild und/oder der aufgenommenen Umgebungsbildsequenz ist.

Des Weiteren wird vorgeschlagen, dass die Recheneinheit zumindest eine Auswerteeinheit umfasst, die infolge eines Überlagerns zumindest eine Verbindungslinie zwischen zumindest einem Bildpunkt des mittels der Bilderfassungseinheit aufgenommenen Umgebungsbilds und/oder der mittels der Bilderfassungseinheit aufgenommenen Umgebungsbildsequenz und zumindest einem Bildpunkt des in der Speichereinheit abgelegten Umgebungsbild und/oder der in der Speichereinheit abgelegten Umgebungsbildsequenz auswertet. Hierbei wertet die Auswerteeinheit bevorzugt eine Verbindungslinie zwischen zumindest einem Bildpunkt des mittels der Bilderfassungseinheit aufgenommenen Umgebungsbilds und/oder der mittels der Bilderfassungseinheit aufgenommenen Umgebungsbildsequenz und einem mit dem Bildpunkt korrespondierenden Bildpunkt des in der Speichereinheit abgelegten Umgebungsbilds und/oder der in der Speichereinheit abgelegten Umgebungsbildsequenz aus. Hierbei werden vorzugsweise ein mittels der Bilderfassungseinheit aktuell aufgenommenes Umgebungsbild und/oder eine mittels der Bilderfassungseinheit aktuell aufgenommene Umgebungsbildsequenz mit einem in der Speichereinheit abgelegten Umgebungsbild und/oder in der Speichereinheit abgelegten Umgebungsbildsequenz überlagert. Die Auswerteeinheit verbindet nun vorzugsweise die jeweiligen Bildpunkte des mittels der Bilderfassungseinheit aktuell aufgenommenen Umgebungsbilds und/oder der mittels der Bilderfassungseinheit aktuell aufgenommenen Umgebungsbildsequenz mit den jeweiligen korrespondierenden Bildpunkten des in der Speichereinheit abgelegten Umgebungsbilds und/oder der in der Speichereinheit abgelegten Umgebungsbildsequenz. Mittels der erfindungsgemäßen Ausgestaltung des autonomen Fortbewegungsgeräts können vorteilhaft einzelnen Bildpunkten Bewegungsvektoren zugeordnet werden, die vorteilhaft zu einer Erarbeitung einer Bewegungsstrategie mittels der Recheneinheit genutzt werden können. Es kann vorteilhaft einer Vielzahl von Bildpunkten Bewegungsvektoren zugeordnet werden, die vorteilhafterweise zu einer präzisen Angabe hinsichtlich einer Position des autonomen Fortbewegungsgeräts innerhalb einer Arbeitsumgebung genutzt werden können. Hierbei kann vorteilhaft mittels einer Überlagerung zumindest eines mittels der Bilderfassungseinheit aufgenommenen Umgebungsbilds und/oder einer mittels der Bilderfassungseinheit aufgenommenen Umgebungsbildsequenz und zumindest einem in der Speichereinheit abgelegten Umgebungsbild und/oder einer in der Speichereinheit abgelegten Umgebungsbildsequenz eine zuverlässige Selbstlokalisation des autonomen Fortbewegungsgeräts ermöglicht werden.

Ferner wird vorgeschlagen, dass sich durch die Auswertung von zumindest einer Verbindungslinie ein Muster ergibt, das in zumindest einem Betriebszustand mittels der Recheneinheit zur Erarbeitung einer Bewegungsstrategie analysiert wird. Besonders bevorzugt ist die Recheneinheit dazu vorgesehen, nach einer Überlagerung zumindest eines mittels der Bilderfassungseinheit aufgenommenen Umgebungsbilds und/oder einer mittels der Bilderfassungseinheit aufgenommenen Umgebungsbildsequenz und zumindest einem in der Speichereinheit abgelegten Umgebungsbild und/oder einer in der Speichereinheit abgelegten Umgebungsbildsequenz ein von einer Vielzahl von Verbindungslinien von unterschiedlichen Bildpunkten gebildetes Muster zu einer Erarbeitung einer Bewegungsstrategie zu analysieren. Anhand einer Analyse des Musters erarbeitet die Recheneinheit besonders bevorzugt eine Bewegungsstrategie, anhand deren eine Bewegung des autonomen Fortbewegungsgeräts an einen Ort eingeleitet wird, der zumindest im Wesentlichen einem Ort entspricht, an dem das in der Speichereinheit abgelegte Umgebungsbild und/oder der in der Speichereinheit abgelegten Umgebungsbildsequenz in einem Anlernprozess aufgenommen wurde. Somit kann vorteilhaft eine zuverlässige und zielgerichtete Fortbewegung des autonomen Fortbewegungsgeräts in einer Arbeitsumgebung erreicht werden.

Zudem wird vorgeschlagen, dass das autonome Fortbewegungsgerät zumindest eine Datenschnittstelle zu einer Übertragung von Daten, insbesondere von elektronischen Daten, umfasst. Unter einer "Datenschnittstelle" soll hier insbesondere eine Schnittstelle zu einer Übertragung von elektronischen Daten verstanden werden. Die Datenschnittstelle kann hierbei als USB-Schnittstelle, als PCI-Bus-Schnittstelle, als AGP-Schnittstelle, als SCSI-Schnittstelle, als Firewire-Schnittstelle, als Bluetooth-Schnittstelle, als Infrarot-Schnittstelle, als WLAN-Schnittstelle usw. ausgebildet sein. Alternativ oder zusätzlich zur Datenschnittstelle ist es zudem denkbar, dass das autonome Fortbewegungsgerät eine Informationsausgabeeinheit umfasst, die dazu vorgesehen ist, einem Nutzer Informationen eines Arbeitsprozesses auszugeben. Die Informationsausgabeeinheit kann hierbei als akustische, als optische und/oder als taktile Informationsausgabeeinheit ausgebildet sein. Bevorzugt ist die Informationsausgabeeinheit als optische Informationsausgabeeinheit ausgebildet, die beispielsweise als LC-Display, als LED-Display usw. ausgebildet ist. Mittels der erfindungsgemäßen Ausgestaltung des autonomen Fortbewegungsgeräts kann vorteilhaft einem Nutzer ein angelerntes Verhalten des autonomen Fortbewegungsgeräts angezeigt werden, so dass der Nutzer bei einer Abweichung von dem angelernten Verhalten eingreifen kann bzw. vorteilhaft nachvollziehen kann, wie es zu einer Abweichung vom gelernten Verhalten gekommen ist.

Des Weiteren wird vorgeschlagen, dass das autonome Fortbewegungsgerät zumindest eine Sensoreinheit zu einer Erfassung zumindest einer Fahrwerkskenngröße und/oder zumindest einer Bewegungskenngröße umfasst, die die Recheneinheit in zumindest einem Betriebszustand bei einer Erarbeitung einer Bewegungsstrategie berücksichtigt. Besonders bevorzugt erarbeitet die Recheneinheit eine Bewegungsstrategie zusätzlich zu der mittels der Analyse des Musters der Verbindungslinien in Abhängigkeit zumindest einer mittels der Sensoreinheit erfassten Fahrwerkskenngröße und/oder zumindest einer mittels der Sensoreinheit erfassten Bewegungskenngröße. Die Sensoreinheit kann hierbei als Odometriesensoreinheit zu einer Detektion zumindest einer zurückgelegten Strecke bzw. von Radumdrehungen zumindest eines Antriebsrads und/oder eines ungetriebenen Rads des autonomen Fortbewegungsgeräts und/oder als Trägheitssensoreinheit zu einer Detektion zumindest einer Drehrate und/oder einer Beschleunigung des autonomen Fortbewegungsgerät ausgebildet sein. Mittels der erfindungsgemäßen Ausgestaltung des autonomen Arbeitsgeräts kann vorteilhaft eine zuverlässige Ermittlung einer Bewegung des autonomen Fortbewegungsgeräts ermöglicht werden, die vorteilhaft bei einer Erarbeitung einer Bewegungsstrategie des autonomen Fortbewegungsgeräts genutzt werden kann.

Ferner wird vorgeschlagen, dass das autonome Fortbewegungsgerät zumindest eine Standortortungseinheit umfasst, welche zu einer Positionsbestimmung vorgesehen ist. Besonders bevorzugt ist die Standortortungseinheit als GPS-Einheit ausgebildet, die zu einer Positionsbestimmung vorgesehen ist. Es ist jedoch auch denkbar, dass die Standortortungseinheit eine andere, einem Fachmann als sinnvoll erscheinende Ausgestaltung aufweist. Zudem ist es ebenfalls denkbar, dass die Recheneinheit zusätzlich dazu vorgesehen ist, in einer Arbeitsumgebung angeordnete Markierungselemente, die mittels der Bilderfassungseinheit erfassbar sind, zu einer Erarbeitung einer Bewegungsstrategie in zumindest einem Betriebszustand zu berücksichtigen. Die in einer Arbeitsumgebung angeordneten Markierungselemente können hierbei von QR-Codeelementen usw. gebildet sein. Vorzugsweise können die in einer Arbeitsumgebung angeordneten Markierungselemente dazu genutzt werden, dem autonomen Fortbewegungsgerät zusätzlich Informationen zur Verfügung zu stellen, wie beispielsweise eine Position einer Ladestation, eine Unterbrechungsanweisung eines Bodenbearbeitungsvorgangs an vorgegebenen Position einer Arbeitsumgebung usw. Mittels der erfindungsgemäßen Ausgestaltung des autonomen Fortbewegungsgeräts kann vorteilhaft eine präzise Lokalisierung eines Standorts des autonomen Fortbewegungsgeräts ermöglicht werden, die vorteilhaft zu einer Erarbeitung einer Bewegungsstrategie berücksichtigt werden kann.

Zudem geht die Erfindung aus von einem Verfahren nach Anspruch 7 zu einer Steuerung eines erfindungsgemäßen autonomen Fortbewegungsgeräts. Mittels des erfindungsgemäßen Verfahrens kann vorteilhaft eine präzise Fortbewegung des autonomen Fortbewegungsgeräts, insbesondere nach einem Anlernprozess, ermöglicht werden, die eine geringe Rechenleistung benötigt. Das Verfahren umfasst, dass zu einer Erarbeitung einer Bewegungsstrategie zumindest ein aufgenommenes Umgebungsbild und/oder eine aufgenommene Umgebungsbildsequenz mit zumindest einem gespeicherten Umgebungsbild und/oder mit zumindest einer gespeicherten Umgebungsbildsequenz überlagert werden/wird. Hierdurch können vorteilhaft Übereinstimmungen ausfindig gemacht werden bzw. ausgewertet werden, die vorteilhaft zu einer Erarbeitung einer Bewegungsstrategie genutzt werden können.

Ferner umfasst das Verfahren, dass zumindest eine Verbindungslinie zwischen zumindest einem Bildpunkt des aufgenommenen Umgebungsbilds und/oder der aufgenommenen Umgebungsbildsequenz und zumindest einem Bildpunkt des gespeicherten Umgebungsbilds und/oder der gespeicherten Umgebungsbildsequenz erstellt wird. Hierdurch kann vorteilhaft jedem Bildpunkt des aufgenommenen Umgebungsbilds und/oder der aufgenommenen Umgebungsbildsequenz infolge des Überlagerns ein Bewegungsvektor zugeordnet werden, der vorteilhaft zu einer Erarbeitung einer sicheren Bewegungsstrategie genutzt werden kann.

Zudem umfasst das Verfahren, dass aus einem Verlauf der Verbindungslinie eine Bewegungsrichtung abgeleitet wird. Somit kann vorteilhaft mit einer geringen Rechenleistung eine Bewegungsstrategie für das autonome Fortbewegungsgerät erarbeitet werden, die selbst bei Veränderungen in einer Arbeitsumgebung eine zuverlässige Orientierung und/oder Fortbewegung des autonomen Fortbewegungsgeräts ermöglicht.

### Zeichnung

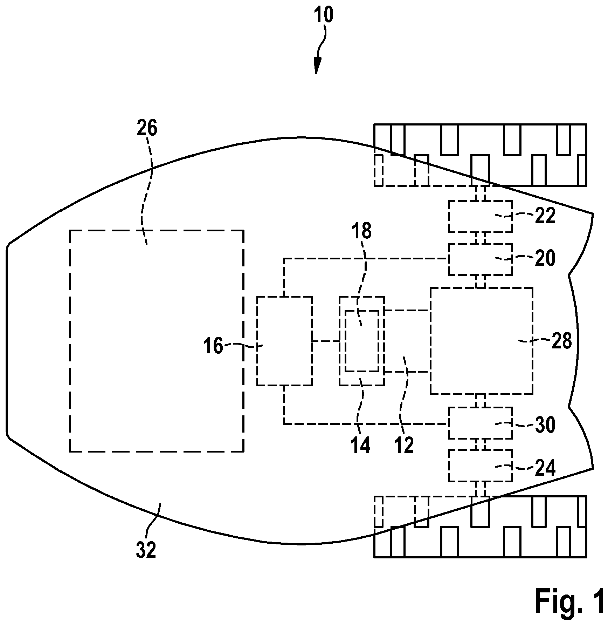

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Figur 1 zeigt hierbei eine Detailansicht eines erfindungsgemäßen autonomen Fortbewegungsgeräts in einer schematischen Darstellung.

### Beschreibung des Ausführungsbeispiels

Figur 1 zeigt ein autonomes Fortbewegungsgerät 10, das zumindest eine Bilderfassungseinheit 12 zu einer Aufnahme von zumindest einem Umgebungsbild und/oder von zumindest einer Umgebungsbildsequenz, zumindest eine Recheneinheit 14 zumindest zu einer Auswertung des aufgenommenen Umgebungsbilds und/oder der aufgenommenen Umgebungsbildsequenz und zumindest einer Speichereinheit 16 zu einer Speicherung zumindest eines Umgebungsbilds und/oder zumindest einer Umgebungsbildsequenz umfasst. Die Bilderfassungseinheit 12, die Recheneinheit 14 und die Speichereinheit 16 sind hierbei in einer Gehäuseeinheit 32 des autonomen Fortbewegungsgeräts 10 angeordnet. Zudem sind die Bilderfassungseinheit 12, die Recheneinheit 14 und die Speichereinheit 16 mittels Datenleitungen des autonomen Fortbewegungsgeräts 10 miteinander zu einem Austausch von Daten verbunden. Das und/oder die in der Speichereinheit 16 abgelegte Umgebungsbild und/oder Umgebungsbildsequenz werden/wird während eines Anlernprozesses des autonomen Fortbewegungsgeräts 10 in einer Arbeitsumgebung mittels der Bilderfassungseinheit 12 erfasst bzw. aufgenommen und anschließend in der Speichereinheit 16 zu einer Erarbeitung einer Bewegungsstrategie mittels der Recheneinheit 14 zu einer selbstständigen Fortbewegung des autonomen Fortbewegungsgeräts 10 in der Arbeitsumgebung gespeichert. Das autonome Fortbewegungsgerät 10 ist als autonomer Rasenmäher ausgebildet, der dazu vorgesehen ist, sich nach einem Anlernprozess selbstständig in einer Arbeitsumgebung fortzubewegen und eine in der Arbeitsumgebung angeordnete Arbeitsfläche selbsttätig zu bearbeiten. Zu einer Bearbeitung der Arbeitsfläche weist das autonome Fortbewegungsgerät 10 eine als Mähwerkeinheit ausgebildete Arbeitsflächenbearbeitungseinheit 26 auf. Es ist jedoch auch denkbar, dass das autonome Fortbewegungsgerät 10 eine andere, einem Fachmann als sinnvoll erscheinende Ausgestaltung aufweist, wie beispielsweise eine Ausgestaltung als autonomer Staubsauger.

Während des Anlernprozesses des autonomen Fortbewegungsgeräts 10 wird das autonome Fortbewegungsgerät 10 von einem Nutzer über eine Arbeitsfläche geschoben oder (fern-)gesteuert. Hierdurch wird dem autonomen Fortbewegungsgerät 10 die zu bearbeitende Arbeitsfläche innerhalb einer Arbeitsumgebung gezeigt. Hierbei wird dem autonomen Fortbewegungsgerät 10 eine Außenkontur (bei einer Ausgestaltung des autonomen Fortbewegungsgeräts 10 entspricht die Außenkontur einer Rasenkante) der Arbeitsfläche gezeigt bzw. entlang der Außenkontur der Arbeitsfläche geschoben. Alternativ oder zusätzlich kann der Nutzer das autonome Fortbewegungsgerät 10 während des Anlernprozesses entlang gewünschter Bahnen bewegen, entlang derer sich das autonome Fortbewegungsgerät 10 nach Vorstellung des Nutzers innerhalb der Arbeitsfläche fortbewegen soll.

Bei dem Anlernprozess zeichnet die Bilderfassungseinheit 12 zumindest ein Umgebungsbild und/oder eine Umgebungsbildsequenz einer Arbeitsumgebung auf. Das aufgenommene Umgebungsbild und/oder die aufgenommene Umgebungsbildsequenz werden/wird für eine Analyse bzw. Auswertung mittels der Recheneinheit 14 zu einer Erarbeitung einer Bewegungsstrategie während einer autonomen Fortbewegung in der angelernten Arbeitsumgebung in der Speichereinheit 16 gespeichert. Hierbei ist es denkbar, dass die Recheneinheit 14 eine Vorprozessierung des aufgenommenen Umgebungsbilds und/oder der aufgenommenen Umgebungsbildsequenz durchführt, um bei einem Zugriff auf das vorprozessierte und in der Speichereinheit 16 gespeicherte Umgebungsbild und/oder die vorprozessierten und in der Speichereinheit 16 gespeicherten Umgebungsbildsequenz eine schnelle Datenverarbeitung zu ermöglichen. Eine Vorprozessierung des aufgenommenen Umgebungsbilds und/oder der aufgenommenen Umgebungsbildsequenz kann bereits während des Anlernprozesses, vor einem Abspeichern oder nach einem Abspeichern durchgeführt werden. Bei einer Vorprozessierung nach einem Abspeichern des aufgenommenen Umgebungsbilds und/oder der aufgenommenen Umgebungsbildsequenz in der Speichereinheit 16 wird das in der Speichereinheit 16 gespeicherte Umgebungsbild und/oder die in der Speichereinheit 16 gespeicherte Umgebungsbildsequenz mittels der Recheneinheit 14 geladen und nach einer Vorprozessierung mittels der Recheneinheit 14 wieder in der Speichereinheit 16 abgespeichert. Zusätzlich zu dem aufgenommenen Umgebungsbild und/oder der aufgenommenen Umgebungsbildsequenz werden weitere Daten während des Anlernprozesses in der Speichereinheit 16 abgespeichert, die zu einer Steuerung des autonomen Fortbewegungsgeräts 10 in der angelernten Arbeitsumgebung genutzt werden können. Die zusätzlichen Daten sind hierbei als ein Betriebszustand der Arbeitsflächenbearbeitungseinheit 26 während einer Aufnahme des jeweiligen Umgebungsbilds und/oder der jeweiligen Umgebungsbildsequenz ausgebildet (z.B. auf einem eigenen, zu mähenden Rasen im eingeschalteten Betriebszustand oder bei der Überquerung eines Gehwegs oder eines Rasenstücks eines Nachbargrundstücks im ausgeschalteten Betriebszustand). Nachdem der Anlernprozess abgeschlossen ist, kann sich das autonome Fortbewegungsgerät 10 mit Hilfe von einem mittels der Bilderfassungseinheit 12 aufgenommenen Umgebungsbild und/oder einer mittels der Bilderfassungseinheit 12 aufgenommenen Umgebungsbildsequenz und des in der Speichereinheit 16 gespeicherten (ggf. vorprozessierten) Umgebungsbild und/oder der in der Speichereinheit 16 gespeicherten Umgebungsbildsequenz mittels einer Analyse der Recheneinheit 14 eine Arbeitsfläche der angelernten Arbeitsumgebung selbstständig bearbeiten. Somit wird ein Verfahren zu einer Steuerung des autonomen Fortbewegungsgeräts 10 zur Verfügung gestellt.

Zu einer selbsttätigen Fortbewegung des autonomen Fortbewegungsgeräts 10 in der angelernten Arbeitsumgebung nach dem Anlernprozess weist das autonome Fortbewegungsgerät 10 die Recheneinheit 14 auf. Die Recheneinheit 14 führt hierzu in zumindest einem Betriebszustand zu einer Erarbeitung einer Bewegungsstrategie eine Bewegungsschätzung durch einen Vergleich von zumindest einem mittels der Bilderfassungseinheit 12 aufgenommenen Umgebungsbild und/oder einer mittels der Bilderfassungseinheit 12 aufgenommenen Umgebungsbildsequenz mit einem in der Speichereinheit 16 abgelegten Umgebungsbild und/oder mit einer in der Speichereinheit 16 abgelegten Umgebungsbildsequenz aus. Hierbei werden/wird zu einer Erarbeitung einer Bewegungsstrategie zumindest ein aufgenommenes Umgebungsbild und/oder eine aufgenommene Umgebungsbildsequenz mit zumindest einem gespeicherten Umgebungsbild und/oder mit zumindest einer gespeicherten Umgebungsbildsequenz überlagert. Die Bilderfassungseinheit 12 ist hierbei zu einer Erfassung von zumindest einem Umgebungsbild und/oder einer Umgebungsbildsequenz als digitale Kamera ausgebildet. Mittels der Recheneinheit 14 werden somit eine kamerabasierte Selbstlokalisation und eine autonome Steuerung des autonomen Fortbewegungsgeräts 10 in einer Arbeitsumgebung nach einem Anlernprozess realisiert. Hierzu umfasst die Recheneinheit 14 zumindest eine Auswerteeinheit 18, die infolge eines Überlagerns zumindest eine Verbindungslinie zwischen zumindest einem Bildpunkt des mittels der Bilderfassungseinheit 12 aufgenommenen Umgebungsbilds und/oder der mittels der Bilderfassungseinheit 12 aufgenommenen Umgebungsbildsequenz und zumindest einem Bildpunkt des in der Speichereinheit 16 abgelegten Umgebungsbild und/oder der in der Speichereinheit 16 abgelegten Umgebungsbildsequenz auswertet. Somit wird zumindest eine Verbindungslinie zwischen zumindest einem Bildpunkt des aufgenommenen Umgebungsbilds und/oder der aufgenommenen Umgebungsbildsequenz und zumindest einem Bildpunkt des gespeicherten Umgebungsbilds und/oder der gespeicherten Umgebungsbildsequenz erstellt. Durch die Auswertung von zumindest einer Verbindungslinie ergibt sich ein Muster, das in zumindest einem Betriebszustand mittels der Recheneinheit 14 zur Erarbeitung einer Bewegungsstrategie analysiert wird. Hierbei wird aus einem Verlauf der Verbindungslinie eine Bewegungsrichtung abgeleitet.

Zu einer Erarbeitung einer Bewegungsstrategie mittels der Recheneinheit 14 startet das autonome Fortbewegungsgerät 10 an einer beliebigen Stelle der angelernten Arbeitsumgebung, wie beispielsweise an einer Batterieladestation. Das autonome Fortbewegungsgerät 10, das sich noch im Stillstand befinden kann, nimmt mittels der Bilderfassungseinheit 12 zumindest ein Umgebungsbild und/oder eine Umgebungsbildsequenz auf. Die Recheneinheit 14 vergleicht dieses und/oder diese mit dem (ggf. vorprozessierten) in der Speichereinheit 16 gespeicherten Umgebungsbild und/oder der in der Speichereinheit 16 gespeicherten Umgebungsbildsequenz des Anlernprozesses. Hierbei findet die Recheneinheit 14 zumindest ein Umgebungsbild und/oder eine Umgebungsbildsequenz in der Speichereinheit 16, das und/oder die dem aktuell mit der Bilderfassungseinheit 12 aufgenommenen Umgebungsbild und/oder mit der Bilderfassungseinheit 12 aufgenommenen Umgebungsbildsequenz in dem Sinne ähnlich ist, dass sich Objekte und/oder Pflanzen an etwa derselben Stelle in den Umgebungsbildern und/oder Umgebungsbildsequenzen befinden. Eventuell dreht sich das autonome Fortbewegungsgerät 10 um seine Hochachse oder die Bilderfassungseinheit 12 wird gedreht, damit eine Blickrichtung der Bilderfassungseinheit 12 mit einer Blickrichtung der Bilderfassungseinheit 12 während des Anlernprozesses zumindest im Wesentlichen übereinstimmt. Hierdurch hat sich das autonome Fortbewegungsgerät 10 anhand eines Vergleichs zumindest des aktuell mittels der Bilderfassungseinheit 12 aufgenommenen Umgebungsbild und/oder der aktuell mittels der Bilderfassungseinheit 12 aufgenommenen Umgebungsbildsequenz mit dem in der Speichereinheit 16 abgelegten Umgebungsbild und/oder mit der in der Speichereinheit 16 abgelegten Umgebungsbildsequenz selbstlokalisiert, um mit einer Bearbeitung der Arbeitsfläche der angelernten Arbeitsumgebung zu beginnen.

Zu einer Bearbeitung der Arbeitsfläche der angelernten Arbeitsumgebung steuert die Recheneinheit 14 eine Antriebseinheit 28 des autonomen Fortbewegungsgeräts 10 stets so, dass das autonome Fortbewegungsgerät 10 zumindest im Wesentlichen denselben Weg nimmt wie es dem autonomen Fortbewegungsgerät 10 beim Anlernprozess gezeigt wurde. Hierbei verwendet die Recheneinheit 14 das und/oder die beim Anlernprozess aufgenommenen und in der Speichereinheit 16 abgespeicherte Umgebungsbild und/oder Umgebungsbildsequenz. Die Recheneinheit 14 scannt das in der Speichereinheit 16 abgespeicherte Umgebungsbild und/oder die in der Speichereinheit 16 abgespeicherte Umgebungsbildsequenz bis das aktuell mit der Bilderfassungseinheit 12 aufgenommene Umgebungsbild und/oder die aktuell mit der Bilderfassungseinheit 12 aufgenommene Umgebungsbildsequenz zumindest im Wesentlichen übereinstimmt. Zudem startet bzw. stoppt die Recheneinheit 14 die Arbeitsflächenbearbeitungseinheit 26 an einer Position innerhalb der angelernten Arbeitsumgebung, die dem autonomen Fortbewegungsgerät 10 während dem Anlernprozess gezeigt wurden. Somit ist die Recheneinheit 14 dazu vorgesehen, Korrespondenzen zwischen einem aktuell mit der Bilderfassungseinheit 12 aufgenommene Umgebungsbild und/oder die aktuell mit der Bilderfassungseinheit 12 aufgenommene Umgebungsbildsequenz und einem in der Speichereinheit 16 abgespeicherte Umgebungsbild und/oder einer in der Speichereinheit 16 abgespeicherte Umgebungsbildsequenz zu ermitteln. Das autonome Fortbewegungsgerät 10 kann zudem auch Positionen innerhalb der Arbeitsumgebung ansteuern, die während des Anlernprozesses nicht angelernt wurden. Hierzu nutzt die Recheneinheit 14 des autonomen Fortbewegungsgeräts 10 ein Bildauswertungsverfahren, bei dem dreidimensionale Informationen ermittelbar sind (z.B. Structure from Motion oder Stereo-Bildanalyse). Zudem umfasst das autonome Fortbewegungsgerät 10 zumindest eine Sensoreinheit 22 zu einer Erfassung zumindest einer Fahrwerkskenngröße und/oder zumindest einer Bewegungskenngröße, die die Recheneinheit 14 in zumindest einem Betriebszustand bei einer Erarbeitung einer Bewegungsstrategie berücksichtigt. Die Sensoreinheit 22 kann hierbei als Odometriesensoreinheit, die zumindest einen Radsensor umfasst, und/oder als Trägheitssensoreinheit, die zumindest einen Drehratensensor und/oder zumindest einen Beschleunigungssensor umfasst, ausgebildet sein. Ferner umfasst das autonome Fortbewegungsgerät 10 zumindest eine Standortortungseinheit 24, welche zu einer Positionsbestimmung vorgesehen ist. Die Standortortungseinheit 24 ist als GPS-Ortungseinheit ausgebildet. Es ist jedoch auch denkbar, dass die Standortortungseinheit 24 als eine andere, einem Fachmann als sinnvoll erscheinende Ortungseinheit ausgebildet ist.

Die Bilderfassungseinheit 12 nimmt während der Bearbeitung der Arbeitsfläche in der angelernten Arbeitsumgebung kontinuierlich aktuelle Umgebungsbilder und/oder Umgebungsbildsequenzen auf. Das aktuell aufgenommene Umgebungsbild und/oder die aktuell aufgenommene Umgebungsbildsequenz wird mit einem in der Speichereinheit 16 gespeicherten Umgebungsbild und/oder mit einer in der Speichereinheit 16 gespeicherten Umgebungsbildsequenz mittels der Recheneinheit 14 verglichen, um darin eine Stelle mit besonders guter Übereinstimmung zu finden. Dazu wird die Methode der Bewegungsschätzung (Optical Flow) verwendet. Diese findet zu einem Bildpunkt im aktuell aufgenommene Umgebungsbild und/oder die aktuell aufgenommene Umgebungsbildsequenz den korrespondierenden Bildpunkt und/oder die korrespondierenden Bildpunkte in dem in der Speichereinheit 16 gespeicherten Umgebungsbild und/oder in der in der Speichereinheit 16 gespeicherten Umgebungsbildsequenz. Im Allgemeinen werden mehrere Korrespondenzen gefunden, da ein entsprechender Szenenpunkt mehrfach während des Anlernprozesses erfasst wurde. Anschließend werden/wird das aktuell aufgenommene Umgebungsbild und/oder die aktuell aufgenommene Umgebungsbildsequenz mit dem in der Speichereinheit 16 gespeicherten Umgebungsbild und/oder mit der in der Speichereinheit 16 gespeicherten Umgebungsbildsequenz überlagert. Die im aktuell aufgenommene Umgebungsbild und/oder die aktuell aufgenommene Umgebungsbildsequenz vorhandenen Bildpunkte werden mit den korrespondierenden Bildpunkten des in der Speichereinheit 16 gespeicherten Umgebungsbild und/oder der in der Speichereinheit 16 gespeicherten Umgebungsbildsequenz mittels Verbindungslinien verbunden. Die Verbindungslinien zwischen den aktuellen Bildpunkten und den korrespondierenden Bildpunkten werden als Bewegungsvektoren bezeichnet. Es kann mittels einer Überlagerung des aktuell aufgenommenen Umgebungsbilds und/oder der aktuell aufgenommene Umgebungsbildsequenz mit dem in der Speichereinheit 16 gespeicherten Umgebungsbild und/oder der in der Speichereinheit 16 gespeicherten Umgebungsbildsequenz für eine Vielzahl von Bildpunkten des aktuell aufgenommenen Umgebungsbilds und/oder der aktuell aufgenommenen Umgebungsbildsequenz ein Bewegungsvektor zu einem korrespondierenden Bildpunkt des in der Speichereinheit 16 gespeicherten Umgebungsbilds und/oder der in der Speichereinheit 16 gespeicherten Umgebungsbildsequenz bestimmt werden. Die Auswerteeinheit 18 wertet hierbei die Bewegungsvektoren aus. Durch die Auswertung der Bewegungsvektoren der Bildpunkte wird ein Muster der Bewegungsvektoren bestimmt, das in zumindest einem Betriebszustand mittels der Recheneinheit 14 zur Erarbeitung einer Bewegungsstrategie analysiert wird. Hierbei ergeben sich in Abhängigkeit des Musters der Bewegungsvektoren folgende Bewegungsstrategien:
- Weisen die Bewegungsvektoren ein zumindest im Wesentlichen konvergierendes Muster auf, so bedeutet dies, dass das autonome Fortbewegungsgerät 10 weiter vorwärts fahren muss, um zu einem Aufnahmeort des in der Speichereinheit 16 gespeicherten Umgebungsbild zu gelangen. Alternativ kann die Recheneinheit 14 die in der Speichereinheit 16 gespeicherte Umgebungsbildsequenz durchsuchen, um ein Umgebungsbild zu finden, dessen Aufnahmeort dem aktuellen Aufnahmeort entspricht.
- Weisen die Bewegungsvektoren ein zumindest im Wesentlichen divergierendes Muster auf, so muss das autonome Fortbewegungsgerät 10 entsprechend rückwärtsfahren oder die Recheneinheit 14 durchsucht die in der Speichereinheit 16 gespeicherte Umgebungsbildsequenz nach einem korrespondierenden Umgebungsbild, wie bereits oben genannt.
- Zeigen die Bewegungsvektoren zumindest im Wesentlichen nach rechts, so muss das autonome Fortbewegungsgerät 10 seine Fahrtrichtung nach rechts ändern.
- Zeigen die Bewegungsvektoren zumindest im Wesentlichen nach links, so muss das autonome Fortbewegungsgerät 10 seine Fahrtrichtung nach links ändern.
- Theoretisch können die Bewegungsvektoren auch im Wesentlichen nach oben oder nach unten zeigen. Handelt es sich um ein flugfähiges autonomes Fortbewegungsgerät 10, so muss dieses seine Flugrichtung entsprechend nach oben bzw. nach unten ändern. Bei einem fahrenden autonomen Fortbewegungsgerät 10, das z.B. über einen Hügel oder durch eine Kuhle fährt, ist eine Steuerung nach oben/unten im Allgemeinen nicht nötig.

In einem normalen Betriebszustand werden die Bewegungsvektoren häufig ein Muster aufweisen, das aus einer Überlagerung von einem konvergierenden und einem mehr oder weniger seitlich zeigenden Muster besteht. Das bedeutet, dass das autonome Fortbewegungsgerät 10 sich vorwärts bewegen und gleichzeitig seine Fahrtrichtung nach rechts oder nach links ändern muss, um sich so zu verhalten, wie ihm dies im Anlernprozess angelernt wurde. Führt das autonome Fortbewegungsgerät 10 diese Bewegungsstrategie aus, so gelangt das autonome Fortbewegungsgerät 10 an eine Position in der angelernten Arbeitsumgebung, an der das konvergierende Muster und das seitlich zeigende Muster verschwunden sind. An dieser Position sind zumindest im Wesentlichen alle Bewegungsvektoren Nullvektoren. Das autonome Fortbewegungsgerät 10 befindet sich somit an einem Aufnahmeort des aktuell aufgenommenen Umgebungsbilds, der einem Aufnahmeort des in der Speichereinheit 16 gespeicherten und korrespondierenden Umgebungsbild entspricht. Anschließend beginnt die Bewegungsabschätzung mittels der Recheneinheit 14 anhand eines neuen aktuell aufgenommenen Umgebungsbilds erneut. Eine Erfassung eines Umgebungsbilds und/oder einer Umgebungsbildsequenz mittels der Bilderfassungseinheit 12, eine Auswertung des aktuell aufgenommenen Umgebungsbilds und/oder der aktuell aufgenommenen Umgebungsbildsequenz mittels der Auswerteeinheit 18 zur Bestimmung der der Bewegungsvektoren und eine Steuerung des autonomen Fortbewegungsgeräts 10 durch eine Analyse des Musters der Bewegungsvektoren mittels der Recheneinheit 14 können hierbei gleichzeitig stattfinden. Somit ergibt sich eine kontinuierlich und zumindest im Wesentlichen ruckfreie Fortbewegung des autonomen Fortbewegungsgeräts 10 in einer angelernten Arbeitsumgebung.

Wird das autonome Fortbewegungsgerät 10 an einer ihm zunächst unbekannten Position innerhalb der angelernten Arbeitsumgebung gestartet, so besteht eine erste Aufgabe des autonomen Fortbewegungsgeräts 10 in der Selbstlokalisation. Hierfür durchsucht die Recheneinheit 14 das in der Speichereinheit 16 gespeicherte Umgebungsbild und/oder die in der Speichereinheit 16 gespeicherte Umgebungsbildsequenz des Anlernprozesses, um eine hohe Übereinstimmung mit dem aktuell mittels der Bilderfassungseinheit 12 aufgenommenen Umgebungsbild und/oder der mittels der Bilderfassungseinheit 12 aufgenommenen Umgebungsbildsequenz zu finden. Damit diese Suche mit hoher Geschwindigkeit stattfinden kann (z.B. im Bereich von wenigen Sekunden), können Strategien zur Beschleunigung angewendet werden. Insbesondere können coarse-to-fine Methoden genutzt werden: So kann die Suche auf einer örtlich und/oder zeitlich unterabgetasteten und in der Speichereinheit 16 gespeicherten Umgebungsbildsequenz beginnen. Zum Beispiel wird von der Recheneinheit 14 nur jedes vierte Umgebungsbild der in der Speichereinheit 16 gespeicherten Umgebungsbildsequenz betrachtet und jeweils um Faktor 4 horizontal und vertikal unterabgetastet. Damit ist eine Anzahl von Bildpunkten bereits um den Faktor 4 x 4 x 4= 64 verringert. Das aktuell mittels der Bilderfassungseinheit 12 aufgenommene Umgebungsbild und/oder die aktuell mittels der Bilderfassungseinheit 12 aufgenommene Umgebungsbildsequenz werden/wird hierbei ebenfalls von der Recheneinheit 14 entsprechend örtlich und/oder zeitlich unterabgetastet. Ist auf diese Weise eine grobe Übereinstimmung gefunden, kann auf die volle örtlich und/oder zeitliche Auflösung gewechselt werden und das Ergebnis verfeinert werden. Bei einer schnellen Suche nach Übereinstimmungen ist es von Vorteil, wenn bereits eine Anzahl von gefundenen Korrespondenzen (Bewegungsvektoren) schnell Auskunft darüber gibt, ob man sich bereits nah an einer richtigen Lösung befindet. Somit genügt zunächst bereits eine Betrachtung einer Anzahl der Bewegungsvektoren. Eine genauere Analyse der Bewegungsvektoren ist in dieser Phase daher noch nicht notwendig. Ein von der Recheneinheit 14 genutzter Algorithmus zur Bewegungsschätzung, der im Falle nicht vorhandener Korrespondenzen auch keine Bewegungsvektoren liefert, ist hier im Vorteil gegenüber einem Algorithmus, der stets den jeweils bestmöglichen Bewegungsvektor liefert. Daher nutzt die Recheneinheit 14 zur Bewegungsschätzung einen Algorithmus, der im Falle nicht vorhandener Korrespondenzen auch keine Bewegungsvektoren liefert.

Sollte dem autonomen Fortbewegungsgerät 10 während des Anlernprozesses nur einen Teil (z.B. Randbereiche) der später zu bearbeitenden Arbeitsfläche angelernt werden, so ist das autonome Fortbewegungsgerät 10 in der Lage, sich auf der gesamten zu bearbeitenden Arbeitsfläche selbstständig zu lokalisieren und dort zu navigieren. Hierfür erstellt die Recheneinheit 14 während eines Betriebs eine Karte. Die Karte kann eine dreidimensionale Karte sein oder eine zweidimensionale Karte (Vogelperspektive) sein, in die Hindernisse eingetragen werden. Hierfür nutzt die Recheneinheit 14 eine dem Fachmann bereits bekannte Ansätze, wie beispielsweise SIAM oder VSIAM ((vision) based simultaneous localization and mapping). Ferner ist denkbar, dass codierte, visuelle Merkmale (z.B. Schilder mit QR-Codes) in der Arbeitsumgebung genutzt werden, um dem autonomen Fortbewegungsgerät 10 zusätzliche Informationen mitzuteilen, beispielsweise eine Position einer Batterieladestation oder einen Hinweis, eine bestimmte Stelle der zu bearbeitenden Arbeitsfläche zeitweise von einer Bearbeitung auszuschließen.

Des Weiteren umfasst das autonome Fortbewegungsgerät 10 zumindest eine Datenschnittstelle 20 zu einer Übertragung von Daten. Somit kann ein Nutzer auf das autonome Fortbewegungsgerät 10 beispielsweise mittels einer als USB-Schnittstelle ausgebildeten Datenschnittstelle 20 elektronische Daten aufspielen. Die Daten können beispielsweise dazu genutzt werden, dass sich das autonome Fortbewegungsgerät 10 in verschiedenen Bereichen ohne eingeschaltete Arbeitsflächenbearbeitungseinheit 26 fortbewegt oder dass das autonome Fortbewegungsgerät 10 zu bestimmten Tageszeiten eine Leuchteinheit des autonomen Fortbewegungsgerät 10 einschaltet, um eine gute Belichtung zur Aufnahme von Umgebungsbildern zu erhalten bzw. damit das autonome Fortbewegungsgerät 10 von dem Nutzer auch bei Dunkelheit gesehen wird. Ferner wird die Datenschnittstelle 20 zu einer Kommunikation des autonomen Fortbewegungsgeräts 10 mit einem externen Datengerät genutzt. Hierbei kann beispielsweis einem Nutzer ein aktuell mittels der Bilderfassungseinheit 12 aufgenommenes Umgebungsbild und/oder eine aktuell mittels der Bilderfassungseinheit 12 aufgenommene Umgebungsbildsequenz mittels der Datenschnittstelle 20, die beispielsweise eine WLAN-Schnittstelle, eine Bluetooth-Schnittstelle usw. umfasst, an einen PC, ein Smartphone, ein Tablet usw. übertragen werden. Hierdurch kann ein Nutzer beispielsweise Abweichungen von einer während des Anlernprozesses gefahrenen Fahrstrecke des autonomen Fortbewegungsgeräts 10 feststellen, insbesondere wenn dem Nutzer mittels der Datenschnittstelle 20 zudem das in der Speichereinheit 16 abgespeicherte Umgebungsbild und/oder die in der Speichereinheit 16 abgespeicherte Umgebungsbildsequenz angezeigt werden kann. Zudem ist es denkbar, dass das autonome Fortbewegungsgerät 10 eine optische Anzeigeeinheit 30 umfasst, mittels derer das aktuell mittels der Bilderfassungseinheit 12 aufgenommene Umgebungsbild und/oder eine aktuell mittels der Bilderfassungseinheit 12 aufgenommene Umgebungsbildsequenz und/oder das in der Speichereinheit 16 abgespeicherte Umgebungsbild und/oder die in der Speichereinheit 16 abgespeicherte Umgebungsbildsequenz angezeigt werden kann. Hierbei ist es denkbar, dass die Recheneinheit 14 bei einer selbsttätigen Erkennung einer Abweichung, die eine Bearbeitung einer Arbeitsfläche bewirkt, im Stande ist Abweichungen visuell hervorzuheben. Bei relevanten Abweichungen, die die Aufgabe des autonomen Fortbewegungsgeräts 10 negativ beeinflussen, hat der Nutzer die Möglichkeit, das autonome Fortbewegungsgerät 10 nachzutrainieren, indem der Nutzer zumindest Teile des Anlernprozesses erneut durchführt und/oder über die Datenschnittstelle 20 eine Änderung vornimmt und/oder ein Hindernis, wie beispielsweise einen Blumenkübel usw., das im mittels der optischen Anzeigeeinheit 30 angezeigt wird bzw. mittels der Datenschnittstelle 20 an einen PC, ein Smartphone, ein Tablet usw. übertragen wurde, aus dem Weg räumt.

## Patentansprüche

1. Autonomes Fortbewegungsgerät, insbesondere autonomer Rasenmäher, das sich nach einem Anlernprozess selbsttätig in einer Umgebung fortbewegt und/oder sich orientiert, mit zumindest einer Arbeitsflächenbearbeitungseinheit (26), mit zumindest einer Bilderfassungseinheit (12) zu einer Aufnahme von zumindest einem Umgebungsbild und/oder von zumindest einer Umgebungsbildsequenz, mit zumindest einer Recheneinheit (14) zumindest zu einer Auswertung des aufgenommenen Umgebungsbilds und/oder der aufgenommenen Umgebungsbildsequenz und mit zumindest einer Speichereinheit (16) zu einer Speicherung zumindest eines Umgebungsbilds und/oder zumindest einer Umgebungsbildsequenz, wobei die Recheneinheit (14) in zumindest einem Betriebszustand zu einer Erarbeitung einer Bewegungsstrategie eine Bewegungsschätzung durch einen Vergleich von zumindest einem mittels der Bilderfassungseinheit (12) aufgenommenen Umgebungsbild und/oder einer mittels der Bilderfassungseinheit (12) aufgenommenen Umgebungsbildsequenz mit einem in der Speichereinheit (16) abgelegten Umgebungsbild und/oder mit einer in der Speichereinheit (16) abgelegten Umgebungsbildsequenz ausführt, wobei das in der Speichereinheit (16) abgespeicherte Umgebungsbild und/oder die in der Speichereinheit (16) abgespeicherte Umgebungsbildsequenz für den Vergleich mittels der Recheneinheit (14) während des Anlernprozesses zeitlich vor dem aufgenommenen Umgebungsbild und/oder vor der aufgenommenen Umgebungsbildsequenz von der Bilderfassungseinheit (12) aufgenommen werden/wird und in der Speichereinheit (16) gespeichert werden/wird, **dadurch gekennzeichnet, dass** zusätzlich zu dem aufgenommenen Umgebungsbild und/oder der aufgenommenen Umgebungsbildsequenz weitere Daten während des Anlernprozesses in der Speichereinheit (16) abgespeichert werden, die zu einer Steuerung in einer angelernten Arbeitsumgebung nutzbar sind, die zusätzlichen Daten als Betriebszustand der Arbeitsflächenbearbeitungseinheit (26) während einer Aufnahme des jeweiligen Umgebungsbilds und/oder der jeweiligen Umgebungsbildsequenz ausgebildet sind.

2. Autonomes Fortbewegungsgerät nach Anspruch 1, **dadurch gekennzeichnet, dass** die Recheneinheit (14) zumindest eine Auswerteeinheit (18) umfasst, die infolge eines Überlagerns zumindest eine Verbindungslinie zwischen zumindest einem Bildpunkt des mittels der Bilderfassungseinheit (12) aufgenommenen Umgebungsbilds und/oder der mittels der Bilderfassungseinheit (12) aufgenommenen Umgebungsbildsequenz und zumindest einem Bildpunkt des in der Speichereinheit (16) abgelegten Umgebungsbild und/oder der in der Speichereinheit (16) abgelegten Umgebungsbildsequenz auswertet.

3. Autonomes Fortbewegungsgerät nach Anspruch 2, **dadurch gekennzeichnet, dass** sich durch die Auswertung von zumindest einer Verbindungslinie ein Muster ergibt, das in zumindest einem Betriebszustand mittels der Recheneinheit (14) zur Erarbeitung einer Bewegungsstrategie analysiert wird.

4. Autonomes Fortbewegungsgerät nach einem der vorhergehenden Ansprüche, **gekennzeichnet durch** zumindest eine Datenschnittstelle (20) zu einer Übertragung von Daten.

5. Autonomes Fortbewegungsgerät nach einem der vorhergehenden Ansprüche, **gekennzeichnet durch** zumindest eine Sensoreinheit (22) zu einer Erfassung zumindest einer Fahrwerkskenngröße und/oder zumindest einer Bewegungskenngröße, die die Recheneinheit (14) in zumindest einem Betriebszustand bei einer Erarbeitung einer Bewegungsstrategie berücksichtigt.

6. Autonomes Fortbewegungsgerät nach einem der vorhergehenden Ansprüche **gekennzeichnet durch** zumindest eine Standortortungseinheit (24), welche zu einer Positionsbestimmung vorgesehen ist.

7. Verfahren zu einer Steuerung eines autonomen Fortbewegungsgeräts nach einem der vorhergehenden Ansprüche, wobei das in der Speichereinheit (16) abgespeicherte Umgebungsbild und/oder die in der Speichereinheit (16) abgespeicherte Umgebungsbildsequenz für den Vergleich mittels der Recheneinheit (14) während des Anlernprozesses zeitlich vor dem aufgenommenen Umgebungsbild und/oder vor der aufgenommenen Umgebungsbildsequenz von der Bilderfassungseinheit (12) aufgenommen werden/wird und in der Speichereinheit (16) gespeichert werden/wird und wobei zu einer Erarbeitung einer Bewegungsstrategie zumindest ein aufgenommenes Umgebungsbild und/oder eine aufgenommene Umgebungsbildsequenz mit zumindest einem gespeicherten Umgebungsbild und/oder mit zumindest einer gespeicherten Umgebungsbildsequenz überlagert werden/wird und wobei zumindest eine Verbindungslinie zwischen zumindest einem Bildpunkt des aufgenommenen Umgebungsbilds und/oder der aufgenommenen Umgebungsbildsequenz und zumindest einem Bildpunkt des gespeicherten Umgebungsbilds und/oder der gespeicherten Umgebungsbildsequenz erstellt wird, wobei aus einem Verlauf der Verbindungslinie eine Bewegungsrichtung abgeleitet wird, **dadurch gekennzeichnet, dass** zusätzlich zu dem aufgenommenen Umgebungsbild und/oder der aufgenommenen Umgebungsbildsequenz weitere Daten während des Anlernprozesses in der Speichereinheit (16) abgespeichert werden, die zu einer Steuerung in einer angelernten Arbeitsumgebung nutzbar sind, wobei die zusätzlichen Daten als Betriebszustand einer Arbeitsflächenbearbeitungseinheit (26) des autonomen Fortbewegungsgeräts während einer Aufnahme des jeweiligen Umgebungsbilds und/oder der jeweiligen Umgebungsbildsequenz ausgebildet sind.

## Claims

1. Autonomous locomotion device, in particular autonomous lawn mower, which, following a learning process, moves onwards and/or orients itself automatically in an environment, comprising at least one working surface processing unit (26), comprising at least one image capture unit (12) for recording at least one environmental image and/or at least one environmental image sequence, comprising at least one computing unit (14) at least for evaluating the recorded environmental image and/or the recorded environmental image sequence, and comprising at least one memory unit (16) for storing at least one environmental image and/or at least one environmental image sequence, the computing unit (14), in at least one operating state for developing a movement strategy, carrying out a movement estimation by means of a comparison of at least one environmental image recorded by means of the image capture unit (12) and/or an environmental image sequence recorded by means of the image capture unit (12) with an environmental image stored in the memory unit (16) and/or with an environmental image sequence stored in the memory unit (16), the environmental image stored in the memory unit (16) and/or the environmental image sequence stored in the memory unit (16) being recorded by the image capture unit (12) during the learning process, chronologically before the recorded environmental image and/or before the recorded environmental image sequence for the comparison by means of the computing unit (14), and being stored in the memory unit (16), **characterized in that** in addition to the recorded environmental image and/or the recorded environmental image sequence, further data which are useful for control in a learned working environment are stored in the memory unit (16) during the learning process, which additional data are formed as the operating state of the working surface processing unit (26) during a recording of the respective environmental image and/or the respective environmental image sequence.

2. Autonomous locomotion device according to Claim 1, **characterized in that** the computing unit (14) comprises at least one evaluation unit (18) which, as a result of a superimposition, evaluates at least one connecting line between at least one image point of the environmental image recorded by means of the image capture unit (12), and/or the environmental image sequence recorded by means of the image capture unit (12) and at least one image point of the environmental image stored in the memory unit (16) and/or the environmental image sequence stored in the memory unit (16).

3. Autonomous locomotion device according to Claim 2, **characterized in that** the evaluation of at least one connecting line results in a pattern which, in at least one operating state, is analysed in order to develop a movement strategy by means of the computing unit (14).

4. Autonomous locomotion device according to one of the preceding claims, **characterized by** at least one data interface (20) for transmitting data.

5. Autonomous locomotion device according to one of the preceding claims, **characterized by** at least one sensor unit (22) for acquiring at least one chassis characteristic value and/or at least one movement characteristic value, which is/are taken into account by the computing unit (14) in at least one operating state during a development of a movement strategy.

6. Autonomous locomotion device according to one of the preceding claims, **characterized by** at least one location locating unit (24), which is provided for position determination.

7. Method for controlling an autonomous locomotion device according to one of the preceding claims, the environmental image stored in the memory unit (16) and/or the environmental image sequence stored in the memory unit (16) being recorded by the image capture unit (12) during the learning process, chronologically before the recorded environmental image and/or before the recorded environmental image sequence for the comparison by means of the computing unit (14), and being stored in the memory unit (16) and, to develop a movement strategy, at least one recorded environmental image and/or one recorded environmental image sequence being superimposed on at least one stored environmental image and/or on at least one stored environmental image sequence, and at least one connecting line between at least one image point of the recorded environmental image and/or the recorded environmental image sequence and at least one image point of the stored environmental image and/or the stored environmental image sequence being created, a movement direction being derived from a course of the connecting line, **characterized in that** in addition to the recorded environmental image and/or the recorded environmental image sequence, further data which are useful for control in a learned working environment are stored in the memory unit (16) during the learning process, wherein the additional data are formed as an operating state of a working surface processing unit (26) of the autonomous locomotion device during a recording of the respective environmental image and/or the respective environmental image sequence.

## Revendications

1. Appareil à locomotion autonome, en particulier, tondeuse à gazon autonome, qui se déplace et/ou s'oriente automatiquement dans un environnement après un processus d'apprentissage, comprenant au moins une unité de traitement de surface de travail (26), au moins une unité de détection d'image (12) destinée à acquérir au moins une image d'environnement et/ou au moins une séquence d'images d'environnement, au moins une unité de calcul (14) destinée à au moins évaluer l'image d'environnement acquise et/ou la séquence d'images d'environnement acquise et au moins une unité à mémoire (16) destinée à stocker au moins une image d'environnement et/ou au moins une séquence d'images d'environnement, dans lequel l'unité de calcul (14), dans au moins un état de fonctionnement destiné à élaborer une stratégie de déplacement, effectue une estimation du déplacement en comparant au moins une image d'environnement acquise au moyen de l'unité de détection d'images (12) et/ou une séquence d'images d'environnement acquise au moyen de l'unité de détection d'images (12) à une image d'environnement stockée dans l'unité à mémoire (16) et/ou à une séquence d'images d'environnement stockée dans l'unité à mémoire (16), dans lequel l'image d'environnement stockée dans l'unité à mémoire (16) et/ou la séquence d'images d'environnement stockée dans l'unité à mémoire (16) est/sont acquise(s) aux fins de la comparaison effectuée au moyen de l'unité de calcul (14) pendant le processus d'apprentissage en avance dans le temps par rapport à l'image d'environnement acquise et/ou par rapport à la séquence d'images d'environnement acquise par l'unité de détection d'mages (12) et est/sont stockée(s) dans l'unité à mémoire (16), **caractérisé en ce que**, outre l'image d'environnement acquise et/ou la séquence d'images d'environnement acquise, des données supplémentaires sont stockées dans l'unité à mémoire (16) pendant le processus d'apprentissage, lesquelles données peuvent être utilisées pour effectuer une commande dans un environnement de travail appris et les données supplémentaires sont utilisées en tant qu'état de fonctionnement de l'unité de traitement de surface de travail (26) pendant une acquisition de l'image d'environnement respective et/ou de la séquence d'images d'environnement respective.

2. Appareil à locomotion autonome selon la revendication 1, **caractérisé en ce que** l'unité de calcul (14) comprend au moins une unité d'évaluation (18) qui évalue par superposition au moins une ligne de raccordement entre au moins un pixel de l'image d'environnement acquise au moyen de l'unité d'acquisition d'images (12) et/ou de la séquence d'images d'environnement acquise au moyen de l'unité de détection d'images (12) et au moins un pixel de l'image d'environnement stockée dans l'unité à mémoire (16) et/ou de la séquence d'images d'environnement stockée dans l'unité à mémoire (16).

3. Appareil à locomotion autonome selon la revendication 2, **caractérisé en ce que** l'évaluation d'au moins une ligne de raccordement conduit à un modèle qui est analysé dans au moins un état de fonctionnement au moyen de l'unité de calcul (14) afin d'élaborer une stratégie de déplacement.

4. Appareil à locomotion autonome selon l'une quelconque des revendications précédentes, **caractérisé par** au moins une interface de données (20) destinée à effectuer une transmission de données.

5. Appareil à locomotion autonome selon l'une quelconque des revendications précédentes, **caractérisé par** au moins une unité de détection (22) destinée à détecter au moins une grandeur caractéristique du train de roulement et/ou au moins une grandeur caractéristique de déplacement dont l'unité de calcul (14) tient compte dans au moins un état de fonctionnement lors de l'élaboration d'une stratégie de déplacement.

6. Appareil à locomotion autonome selon l'une quelconque des revendications précédentes, **caractérisé par** au moins une unité de localisation (24) qui est prévue pour déterminer une position.

7. Procédé de commande d'un appareil à locomotion autonome selon l'une quelconque des revendications précédentes, dans lequel l'image d'environnement stockée dans l'unité à mémoire (16) et/ou la séquence d'images d'environnement stockée dans l'unité à mémoire (16) est/sont acquise(s) par l'unité de détection d'images (12) aux fins de la comparaison effectuée au moyen de l'unité de calcul (14) pendant le processus d'apprentissage en avance dans le temps par rapport à l'image d'environnement acquise et/ou par rapport à la séquence d'images d'environnement acquise et est/sont stockée(s) dans l'unité à mémoire (16) et dans lequel au moins une image d'environnement acquise et/ou une séquence d'images d'environnement acquise est/sont superposée(s) à des fins d'élaboration d'une stratégie de déplacement à au moins une image d'environnement stockée et/ou à au moins une séquence d'images d'environnement stockée et dans lequel au moins une ligne de raccordement entre au moins un pixel de l'image d'environnement acquise et/ou de la séquence d'images d'environnement acquise et au moins un pixel de l'image d'environnement stockée et/ou de la séquence d'images d'environnement stockée est établie, dans lequel une direction de déplacement est déduite d'une direction de la ligne de raccordement, **caractérisé en ce que**, outre l'image d'environnement acquise et/ou la séquence d'images d'environnement acquise, des données supplémentaires sont stockées dans l'unité à mémoire (16) pendant le processus d'apprentissage, lesquelles données peuvent être utilisées pour effectuer une commande dans un environnement de travail, dans lequel les données supplémentaires sont utilisées en tant qu'état de fonctionnement d'une unité de traitement de surface de travail (26) de l'appareil à locomotion autonome pendant une acquisition de l'image d'environnement respective et/ou de la séquence d'images d'environnement respective.
